# EUROPÄISCHE PATENTSCHRIFT

(11) **EP 2 539 289 B1**
(45) Veröffentlichungstag und Bekanntmachung des Hinweises auf die Patenterteilung: **27.05.2015**
(21) Anmeldenummer: 11706179.6
(22) Anmeldetag: 24.02.2011
(51) Int. Cl.: C03C 3/097, C03C 3/083, C03C 3/112, C03C 21/00, C03B 18/02, C03B 27/012

(54) **LITHIUM-ALUMINOSILICATGLAS MIT HOHEM E-MODUL UND VERFAHREN ZU DESSEN HERSTELLUNG**
LITHIUM ALUMINOSILICATE GLASS HAVING A HIGH E-MODULE AND METHOD FOR THE PRODUCTION THEREOF
VERRE D'ALUMINOSILICATE DE LITHIUM AYANT UN MODULE D'ÉLASTICITÉ IMPORTANT ET SON PROCÉDÉ DE FABRICATION

(30) Priorität: 26.02.2010 DE 102010009585
(43) Veröffentlichungstag der Anmeldung: 02.01.2013
(73) Patentinhaber: Schott AG, 55122 Mainz (DE)
(72) Erfinder: BRIX, Peter, 55116 Mainz (DE); BEIER, Wolfram, 55270 Essenheim (DE); ALKEMPER, Jochen, 55270 Klein-Winternheim (DE)
(74) Vertreter: Blumbach Zinngrebe
(86) Internationale Anmeldenummer: PCT/EP2011/000888
(87) Internationale Veröffentlichungsnummer: WO 2011/104018

(56) Entgegenhaltungen:
- US-A1- 2008 020 919
- US-B1- 6 187 441
- DATABASE WPI Week 200882 Thomson Scientific, London, GB; AN 2008-O21705 XP002638479, -& WO 2008/149858 A1 (NIPPON ELECTRIC GLASS CO) 11. Dezember 2008 (2008-12-11) & US 2010/087307 A1 (MURATA TAKASHI [JP] ET AL) 8. April 2010 (2010-04-08)
- DATABASE WPI Week 200268 Thomson Scientific, London, GB; AN 2002-630739 XP002638480, -& JP 2002 174810 A (HOYA CORP) 21. Juni 2002 (2002-06-21)

## Beschreibung

Die Erfindung betrifft Lithium-Aluminosilicatgläser, insbesondere Lithium-Aluminosilicatglas-Gegenstände mit einem hohen Elastizitätsmodul, sowie ein Verfahren zur Herstellung solcher Gläser oder Gegenstände.

### Stand der Technik

Für zahlreiche Spezialglas-Anwendungen wird Flachglas benötigt, beispielsweise in Form von Glasscheiben als Sichtfenster, Fensterglas oder in Displays oder aber auch in Form von Substratgläsern, beispielsweise für Harddisks oder Elektroanwendungen. Die Herstellung von solchem Flachglas aus einer Glasschmelze erfolgt nach bekannten Verfahren, beispielsweise durch Walzen, Ziehen, Gießen oder Floaten. Aufgrund seiner hohen Wirtschaftlichkeit hat das Floaten eine weite Verbreitung.

Für solche Anwendungen werden typischerweise Kalknatrongläser oder auch Aluminosilicatgläser verwendet. Bekannte Kalknatron-Gläser, zum Beispiel das gewöhnliche Fensterglas, und bekannte Aluminosilicatgläser wie beispielsweise das "Gorilla^{™}" der Firma Corning Incorporated oder das Glas der Marke"eXtraDur®" der Firma Schott AG weisen jedoch einen relativ niedrigen Elastizitätsmodul (E-Modul) von 72 bis 73 GPa bei gleichzeitig relativ hohen Glasübergangstemperaturen (T_{g}) auf. So hat Kalknatron-Glas typischerweise einen Tg-Wert um 550°C, während eXtraDur typischerweise einen T_{g}-Wert von etwa 600°C aufweist.

Diese Gläser erfüllen damit nur unzureichend die Forderung nach Substraten, die einerseits nur schwer durchzubiegen sind (hoher E-Modul) und die andererseits bei möglichst niedriger Temperatur verarbeitet und chemisch vorgespannt werden können.

Eine niedrige Temperatur für die chemische Vorspannung ist insbesondere vorteilhaft, weil sie zum einen eine Energieersparnis darstellt und andererseits auch eine Anpassung an die Schmelztemperaturen der Salze und Salzmischungen für den Ionenaustausch ermöglicht. Darüber hinaus ist ein niedriger Wert für den T_{g} auch für die Bearbeitung solcher Substrate vorteilhaft, wenn diese beispielsweise verpresst oder gebogen werden sollen. Dies ist zum einen energetisch sinnvoll und schont andererseits auch die Materialien, die zum Verarbeiten der Gläser benötigt werden.

Aus dem Stand der Technik sind Gläser bekannt, die in Bezug auf einzelne Eigenschaften den genannten Voraussetzungen entsprechen, jedoch in Bezug auf die weiteren genannten Eigenschaften deutlich nachteilig sind. D.h. es sind durchaus Gläser bekannt, die beispielsweise einen hohen E-Modul aufweisen; gleichzeitig haben diese Gläser jedoch auch einen hohen T_{g} -Wert und/oder hohe Verarbeitungstemperaturen oder sind nicht optimal-insbesondere chemisch - vorspannbar.

So beschreibt beispielsweise die US 2008/0020919 A1 getemperte Aluminosilicatgläser, deren Tg-Wert bei kleiner als 580°C und bevorzugt bei kleiner als 490°C liegt, dessen E-Moduln jedoch bei maximal 77 GPa liegen. Die Gläser weisen somit zwar einen niedrigen Tg-Wert auf, die erreichten E-Moduln sind jedoch nicht ausreichend.

Darüber hinaus sollen diese Aluminosilicatgläser ein molares Verhältnis zwischen (Li₂O + Al₂O₃) zu (Na₂O + K₂O) aufweisen, das kleiner als zwei ist. Für den Austausch von Li-Ionen aus dem Glas gegen Na- und/oder K-Ionen ist jedoch ein Verhältnis kleiner zwei nicht optimal, da im Verhältnis zum Gesamtalkaliionen-Gehalt die Li-Ionen unterrepräsentiert sind. Für eine gute chemische Vorspannbarkeit durch den Austausch von Li-Ionen, die ökonomisch deutliche Vorteile gegenüber dem Austausch von anderen Alkaliionen aufweisen, ist ein höherer Lithiumoxid-Gehalt wünschenswert.

In der JP 20060276510 werden TiO₂-haltige Aluminosilicatgläser beschrieben, die chemisch vorgespannt werden können. Durch den vorgeschriebenen TiO₂-Gehalt kann es jedoch zur Ausbildung eines stark braun färbenden Fe-Ti-Komplexes im Glas kommen, insbesondere wenn Eisenoxid aus anderen Gründen bewusst zugesetzt werden soll. Außerdem ist TiO₂ als polyvalentes Ion für die Darstellung von Gläsern durch einen Floatprozess ungünstig, da sich leicht Beläge auf der Glasoberfläche durch zu Ti³⁺ reduziertes Ti⁴⁺ bilden können.

Die Offenlegungsschrift US 2009/0142568 A1 beschreibt feste und kratzbeständige Silicatgläser, wobei die Festigkeit durch die Minimierung von Sauerstoffatomen, die keine Brückenbindung eingehen, erreicht wird. Es werden Aluminoborosilicat-Gläser offenbart, für die gilt: 15 Mol-% <= (R₂O + R'O-Al₂O₃-ZrO₂)-B₂O₃ <= 4 Mol-%, wobei R für Li, Na, K, Rb und Cs und R' für Mg, Ca, Sr und Ba steht. Die in der Druckschrift explizit beschriebenen Gläser erreichen jedoch maximal einen E-Modul von 76 GPa, der für Anwendungen, in denen hochfeste Gläser benötigt werden, nicht ausreichend ist.

Das US-Patent 6 187 441 B1 befasst sich mit Glassubstraten zur Informations- bzw. Magnetspeicherung. Ziel ist eine möglichst glatte Oberfläche des Mediums.

### Beschreibung der Erfindung

Aufgabe der Erfindung ist daher die Bereitstellung eines Glases oder Glas-Gegenstands mit einem hohen E-Modul, das zugleich niedrige Verarbeitungs- und/oder Glasübergangstemperaturen aufweist sowie eines Verfahrens zu dessen Herstellung.

Eine weitere Aufgabe der Erfindung betrifft ein solches Glas oder einen solchen Glas-Gegenstand, das oder der chemisch und/oder thermisch stark vorspannbar ist.

Noch eine Aufgabe der Erfindung ist die kostengünstige Herstellung solcher Gläser oder Glas-Gegenstände.

Demgemäß umfasst ein erfindungsgemäßes Lithium-Aluminosilicatglas, im Folgenden auch LAS-Glas genannt, Gläser, die eine Zusammensetzung in Mol-% aus folgenden Bereichen aufweisen:

| | |
|---|---|
| 60 -70 | SiO₂ |
| 10 - 13 | Al₂O₃ |
| 0,0 - 0,9 | B₂O₃ |
| 9,6 - 11,6 | Li₂O |
| 8,2 - < 10 | Na₂O |
| 0,0 - 0,7 | K₂O |
| 0,2 - 2,3 | CaO |
| 0,0 - 0,4 | ZnO |
| 1,3 - 2,6 | ZrO₂ |
| 0,0 - 0,5 | P₂O₅ |
| 0,003 - 0,100 | Fe₂O₃ |
| 0,0 - 0,3 | SnO₂ |
| 0,004 - 0,200 | CeO₂, |

Die Glaszusammensetzung soll darüber hinaus folgende Verhältnisse aufweisen:
(Li₂O+Al₂O₃) / (Na₂O+K₂O) > 2,
0,47 < Li₂O/(Li₂O+Na₂O+K₂O) < 0,70 und
0,8 < CaO+Fe₂O₃+ZnO+P₂O₅+B₂O₃+CeO₂ < 3.

Darüber hinaus weisen erfindungsgemäße LAS-Gläser einen E-Modul von zumindest 82 GPa und bevorzugt zumindest 84 GPa auf.

Die Erfindung umfasst darüber hinaus ein Verfahren zur Herstellung von Lithium-Aluminosilicatglas-Gegenständen, wobei zunächst aus den oben genannten Bestandteilen unter Einhaltung der genannten Verhältnisse und Summen eine Schmelze hergestellt wird, aus der anschließend ein Lithium-Aluminosilicatglas-Gegenstand geformt wird, insbesondere bevorzugt mittels eines Floatverfahrens. Zusätzlich zu den oben genannten Bestandteilen können die erfindungsgemäßen LAS-Gläser auch geringe Mengen unterschiedlicher Substanzen enthalten, die zum Läutern der Schmelze zugegeben wurden.

Die Erfinder haben festgestellt, dass LAS-Gläser aus diesem speziellen Zusammensetzungsbereich, die den genannten Verhältnissen gerecht werden, besonders hohe E-Moduln aufweisen. Dies ist insbesondere überraschend, da aus dem Stand der Technik, beispielsweise der US 2008/0020919 A1, Gläser bekannt sind, die ähnliche Zusammensetzungen, aber deutlich geringere E-Moduln aufweisen. Die Erfinder vermuten, dass die hohen E-Moduln auf die besonderen Rahmenbedingungen der Glaszusammensetzung, namentlich die beanspruchten Alkali-Verhältnisse sowie die Minimalbestandteile, die einen Anteil zwischen 0,8 und 3 Mol-% der Gesamtzusammensetzung ausmachen, zurückzuführen sind.

LAS-Gläser, die nach der oben beschriebenen Zusammensetzung hergestellt sind, sind sehr gut chemisch vorspannbar. Insbesondere bevorzugt ist dabei der Austausch von Li-Ionen aus dem Glas gegen einwertige Kationen mit einem größeren Ionenradius, beispielsweise aus einer Salzschmelze. Es kann jedoch auch ein mehrstufiger Austauschprozess durchgeführt werden, bei dem auch unterschiedliche Kationen, wie Li-, Na- und/oder K-Ionen, in unterschiedlichen tiefen Oberflächenbereichen bevorzugt ausgetauscht werden. Über einen solchen Vorspannprozess sind vorteilhaft Vorspannverläufe mit Gradienten vom Inneren eines LAS-Glas-Gegenstands nach außen zur Oberfläche des LAS-Glas-Gegenstands erzeugbar.

Darüber hinaus kann das LAS-Glas vorteilhaft auch thermisch vorspannbar sein. Es weist dann bevorzugt einen linearen thermischen Ausdehnungskoeffizienten α₍₂₀₋₃₀₀₎ auf, zwischen 8,0 * 10⁻⁶ K⁻¹ und 9, 0 * 10⁻⁶ K⁻¹ liegt.

Bevorzugt kann das LAS-Glas unter Verwendung einer herkömmlichen Luftvorspannanlage für Kalk-Natron-Glas mit Wärmeübergangskoeffizienten zwischen 200 und 500 W m⁻² K⁻¹ bei 1 bis 9 kPa Anblasdruck thermisch vorgespannt werden. Solche LAS-Gläser können vorteilhaft als thermisch vorgespannte Glaskörper für Fahrzeugverglasungen verwendet werden.

Natürlich können auch thermisches und chemisches Vorspannen kombiniert angewendet werden. Das Vorspannen erhöht dabei vorteilhaft die Festigkeit und die Kratzbeständigkeit des Glases, und erweitert so die Bereiche seiner Einsatzmöglichkeiten.

Gemäß einer besonders bevorzugten Weiterbildung der Erfindung weist ein LAS-Glas eine Glasübergangstemperatur T_{g} von weniger als 540°C, bevorzugt einen T_{g}-Wert, der zwischen 500 und 540°C liegt und/oder eine Verarbeitungstemperatur (V_{A}) bei einer Viskosität der Schmelze von 10⁴ dPa·s von weniger als 1150°C, bevorzugt zwischen 900 und 1100°C auf. Ein niedriger Tg-Wert und eine niedrige V_{A} sind prozessökonomisch sehr vorteilhaft. Sie sparen Energiekosten, Beheizungszeit und schonen die Anlagenteile, die mit der Schmelze oder dem heißen Glas in Berührung kommen. Niedrige Glasübergangs- und Verarbeitungstemperaturen sind jedoch in Bezug auf sehr steife Gläser mit einem hohen E-Modul nicht selbstverständlich, da es sich hierbei im Allgemeinen um sehr zähe, hochviskose Hartgläser handelt. Daher stellen die niedrigen Glasübergangs- und Verarbeitungstemperaturen für Gläser mit einem hohen E-Modul einen der wesentlichen Vorteile dieser Erfindung dar.

Das erfindungsgemäße Glas enthält zwischen 62 und 68 Mol-% SiO₂. Unter dem Begriff Mol-% wird im Rahmen der Erfindung ein prozentualer Stoffmengengehalt auf Molbasis verstanden. SiO₂ ist der Hauptnetzwerkbildner des Glases und ermöglicht den Erhalt eines stabilen Glases.

Liegt der SiO₂-Gehalt unterhalb von 62 Mol-%, verschlechtern sich die chemische Beständigkeit sowie seine Entglasungsstabilität des LAS-Glases. SiO₂-Gehalte oberhalb von etwa 68 Mol-% führen dagegen zu unerwünscht hohen Viskositäten und einer hohen Glasübergangstemperatur T_{g}. Insbesondere ein hoher T_{g}-Wert ist jedoch technisch und wirtschaftlich für das Schmelzen und Floaten des Glases nachteilig, da er erhöhte Energiekosten verursacht und die Anlagenteile, die mit der Schmelze in Berührung kommen, d.h. Schmelzwanne und Floatbad, stärker belastet werden.

Ein erfindungsgemäßes LAS-Glas umfasst zudem zwischen 9 und 12 Mol-% Al₂O₃. Aluminiumoxid ist neben dem SiO₂ ein wesentlicher Faktor für die Netzwerkbildung des Glases. Im Gegensatz zu SiO₂ fördert Al₂O₃ jedoch die Diffusion von Alkaliionen beim Ionenaustausch beispielsweise in chemischen Vorspannprozessen. Es dient damit der Erhöhung der Ionenaustauschbarkeit des LAS-Glases, um durch chemisches Vorspannen hohe Glasfestigkeiten erzeugen zu können. Al₂O₃-Gehalte oberhalb von 12 Mol-% verschlechtern jedoch die Entglasungsstabilität und führen zu hohen Schmelz- und Formgebungstemperaturen, die insbesondere wenn das Glas durch Floaten geformt wird, nachteilig sein können.

P₂O₅ gehört ebenfalls zu den Netzwerkbildnern, begünstigt jedoch niedrigere Glasübergangs- und Verbarbeitungstemperaturen. Es steuert somit der T_{g}-erhöhenden Wirkung des Al₂O₃ entgegen. Darüber hinaus fördert P₂O₅ die Ionenaustauschbarkeit des Glases.

Alkalioxide wie Li₂O, Na₂O und K₂O ebenso wie Borsäure B₂O₃ werden Floatgläsern zugesetzt, um die Viskosität zu erniedrigen. Dies ist vorteilhaft, da durch niedrigere Viskositäten auch niedrigere Schmelz- und Formgebungstemperaturen und insbesondere niedrigere Float-Temperaturen, ermöglich werden. Allerdings sollten die Na₂O-Gehalte generell unter 10 Mol-% liegen, da ansonsten die Eindiffusion von Na-Ionen aus dem Salz in das Glas beim chemischen Vorspannen thermodynamisch zu stark behindert würde. Außerdem vergrößern zu hohe Na₂O-Gehalte den thermischen Ausdehnungskoeffizienten, was sich negativ auf die Prozessstabilität bei der Glasherstellung, insbesondere im Bereich der Kühlbahn, auswirkt.

Niedrigere Gehalte als 8 Mol-% Na₂O sollten aufgrund der starken Kristallisationsneigung Li₂O-haltiger Glassynthesen vermieden werden: die Formgebung durch den Floatprozess kann dann durch starkes Kristallwachstum, das zu Ober- und Unterseitenkristallen führt, stark erschwert werden. Ein gewisser Gehalt an Na-Ionen ist jedoch insbesondere dann sinnvoll, wenn die Gläser chemisch vorgespannt werden sollen, die die Na-Ionen gegen K-Ionen ausgetauscht werden können.

Kaliumoxid sollte dem Glas möglichst nicht zugesetzt werden oder jedenfalls einen Analysewert von 0,5 Gew.-% nicht überschreiten, da beim chemischen Vorspannen die kleineren Li-Ionen durch die größeren Na- und/oder K-Ionen aus dem Austauschsalz ersetzt werden sollen. Bereits im Glas-Netzwerk in höheren Anteilen vorhandene K-Ionen würden diesen Prozess beeinträchtigen. Außerdem vergrößert K₂O aufgrund des größeren Ionendurchmessers die thermische Ausdehnung der Gläser sogar noch erheblich stärker als Na₂O. Kaliumoxid-Gehalte unterhalb von 0,02 Gew.-% sind dagegen mit den verfügbaren technischen Rohstoffen kaum wirtschaftlich zu realisieren.

Alkalioxide stellen ionenaustauschbare Kationen für chemische Vorspannprozesse bereit. In diesem Zusammenhang ist insbesondere das Li₂O zu nennen, da Li-Ionen in der Glasmatrix besonders gut beweglich sind und daher hohe Austauschraten bei vergleichsweise niedrigen Temperaturen ermöglichen. Durch die rasche Diffusion der Li-Ionen erlaubt der Einsatz von Li₂O die Erzeugung hoher Druckspannungen schon bei vergleichsweise kleinen oder geringmächtigen Druckspannungsschichten. Aus dieser Kombination resultieren hohe Festigkeiten, insbesondere auch bei dünnen Glasformaten. Durch den Austausch von Li-Ionen können aber auch, in Glasgegenständen mit stärkeren Wandungen, große und daher sehr starke Druckspannungsschichten erzeugt werden. Natürlich können auch Na- und K-Ionen für Ionenaustauschprozesse Verwendung finden, die jedoch im Allgemeinen höhere Austauschtemperaturen benötigen.

Für eine gute Vorspannbarkeit sollten die Alkalioxide also zu einem großen Teil als Li₂O eingeführt werden. Andererseits verschlechtert ein zu hoher Li₂O-Gehalt die Entglasungsstabilität und die chemische Beständigkeit. Gleichzeitig nimmt die thermische Ausdehnung des LAS-Glases mit zunehmendem Li₂O-Gehalt zu, was das Kühlen des Glases in der Kühlbahn und die Bruchempfindlichkeit bei Temperaturwechseln verschlechtert. Außerdem ist Li₂O teuer. Aus diesen Gründen ist der Gehalt an Li₂O auf maximal 11,6 Mol-% beschränkt.

Gemäß einer besonders bevorzugten Ausführungsform der Erfindung weist daher ein LAS-Glas, das chemisch vorgespannt ist, eine Biegebruchfestigkeit, gemessen mit der Doppelringmethode nach EN 1288-5, zwischen 550 und 900 N/mm² auf.

Eine gute Ionenaustauschbarkeit ist gegeben, wenn die Summe der Gehalte an Li₂O und Al₂O₃ den Gehalt der größeren Alkalioxide Na₂O und K₂O um mindestens das Doppelte übersteigt; d.h. (Li₂O+Al₂O₃)/(Na₂O+K₂O) > 2.

Zirkonoxid ist ein Netzwerkbildner, ähnlich dem SiO₂ und verbessert generell die chemische Beständigkeit des LAS-Glases, insbesondere jedoch seine Alkalibeständigkeit. Dies ist vorteilhaft, wenn die aus dem Glas hergestellten Gegenstände beispielsweise mittels Waschlauge gereinigt werden sollen. Darüber hinaus wird durch den vorgesehenen ZrO₂-Gehalt der korrosive Angriff der Glasschmelze auf das Feuerfest-Material des Schmelzaggregats gemindert, so dass dessen Lebensdauer erhöht wird.

Generell ist der Anteil an ZrO₂ jedoch auf einen Wert von maximal 3 Mol-% beschränkt, da es ein extrem schwer aufzuschmelzender Glasbestandteil ist und die Kristallisationsanfälligkeit des LAS-Glases erhöht. Auch können nicht aufgeschmolzene ZrO₂-Relikte beim thermischen Vorspannen des Glases zu Spontanbrüchen führen. Bei gefloateten LAS-Glas-Gegenständen kann es darüber hinaus zu unerwünschten Oberflächendefekten kommen. Zirkonoxid wird bei der Glaskeramikherstellung als Keimbildner eingesetzt und kann beim Kontakt der Glasoberfläche mit dem Zinnbad beim Floaten zur Kristallisation von bis zu mehrere 100 µm großen hoch-Quarzmischkristallen im Oberflächenbereich des Glases führen.

Erdalkalioxide wie MgO, CaO und SrO sowie Zinkoxid ZnO können zur Verbesserung der Entglasungs- und Entmischungsstabilität zugegeben werden. Generell verbessert eine möglichst hohe Anzahl unterschiedlicher. Bestandteile die Entglasungsstabilität von Gläsern. Dieser Tatsache ist mit der Summe der Bestandteile, die nur geringe Mengen an der Gesamtzusammensetzung ausmachen, Rechnung getragen:
0,8 < CaO+Fe₂O₃+ZnO+P₂O₅+B₂O₃+CeO₂ < 3.

Erdalkalioxide und Zinkoxid sollten jedoch nur in geringen Mengen zugegeben werden, da sie die Diffusion der Alkaliionen behindern. Dies wiederum würde, zur Erzielung einer gegebenen Vorspannung, längere Ionenaustauschzeiten nach sich ziehen. Auf eine Zugabe von MgO und SrO wird daher ganz verzichtet. Allerdings können die Gläser Spuren dieser Verbindungen enthalten, die aufgrund nicht zu vermeidender Verunreinigungen in den Glasrohstoffen oder durch Verunreinigungen durch vorher im gleichen Tiegel geschmolzenen Gläsern oder durch Lösung aus den FeuerfestMaterialien der Randsteine in das Glas eingetragen werden. CaO und ZnO können jedoch in geringen Mengen zugegeben werden.

Das Glas sollte wegen der Unverträglichkeit mit dem Floatverfahren und nicht zuletzt auch aus Umweltschutzgründen kein As₂O₃ oder Sb₂O₃ als Läutermittel enthalten. Unter den stark reduzierenden Bedingungen der Floatbadatmosphäre können die Oxide zu den elementaren Metallen reduziert werden und das Glas unerwünschte, nicht mehr entfernbare Oberflächenverfärbungen aufweisen.

Daher kann stattdessen mit einer Kombination der polyvalenten Oxide SnO₂, CeO₂ und Fe₂O₃ geläutert werden. Gemäß einer besonders bevorzugten Weiterbildung der Erfindung sollten zumindest zwei Oxide aus der Gruppe SnO₂, CeO₂ und Fe₂O₃ in einer Mindestmenge von 0,1 Mol-% zum Läutern eingesetzt werden. Allerdings sollte der SnO₂-Gehalt eine Obergrenze von 0,5 Gew.-% nicht überschreiten, da ansonsten die Glasfehler durch Verdampfungs- und Kondensationserscheinungen stark zunehmen würden. Außerdem nimmt durch höhere SnO₂-Gehalte die Entglasungsneigung des LAS-Glases überproportional zu.

Ein SnO₂-Gehalt von maximal 0,5 Gew.-% ist jedoch nicht ausreichend, um ein blasenfreies Glas herzustellen. Durch eine Kombination von SnO₂ mit CeO₂ und/oder Fe₂O₃ kann dieser Nachteil aber überraschenderweise wieder ausgeglichen werden.

Daher kann gemäß einer besonders bevorzugten Weiterbildung der Erfindung der Anteil der Bestandteile SnO₂, CeO₂ und Fe₂O₃ an der Gesamtzusammensetzung des LAS-Glases größer als 0,1 Mol-% sein, d.h. SnO₂+CeO₂+Fe₂O₃ > 0,1.

Allerdings führt der Einsatz von CeO₂ und Fe₂O₃ zu einer Färbung des Glases. Je nach Verwendung kann diese Färbung mehr oder weniger störend wirken oder aber auch beabsichtigt sein. Die Grünfärbung, die beispielsweise durch die Verwendung von Eisenoxid entsteht, wirkt filternd im infraroten Wellenlängenbereich. Dies hat sich als vorteilhaft beispielsweise bei der Verglasung von Fahrzeugen erwiesen. Im Sommer kommt es so zu einer geringeren Erwärmung des Fahrzeuginnenraums durch die Sonneneinstrahlung. Im Winter werden dagegen Wärmeverluste an die Umgebung gemindert.

Darüber hinaus ist ein gewisser Gehalt an Fe₂O₃ auch günstig, wenn in der Nachbearbeitung eine thermische Ankopplung notwendig ist. So kann durch den Eisenoxidzusatz die Temperatur, die z.B. zum Biegen einer Glasscheibe notwendig ist, schneller erreicht werden.

Nachteilig am Einsatz von CeO₂ und Fe₂O₃ als Läutermittel ist allerdings die Tatsache, dass diese Oxide zusammen mit TiO₂ stark braun färbende Farbkomplexe ausbilden. Aus diesem Grund sollte TiO₂ kein regulärer Bestandteil des LAS-Glases sein. Gleichzeitig sollten möglichst TiO₂-arme Rohstoffe verwendet werden. Gemäß einer bevorzugten Ausführungsform der Erfindung sollte das LAS-Glas auch frei von MgO und/oder As₂O₃ und/oder Sb₂O₃ und/oder V₂O₅ und/oder Bi₂O₃ und/oder PbO sein.

Der Gehalt an CeO₂ wird auf maximal 0,112 Mol-% begrenzt, da dieses Oxid sonst eine zu starke Fluoreszenz des Glases sowie eine gelbliche Färbung bewirken würde.

Als weiterer läuteraktiver Zusatz kann optional auch Fluorid, beispielsweise in Form von CaF₂ oder Na₂SiF₆, zugesetzt werden. Bereits sehr niedrige Fluorid-Gehalte von 0,025 Gew.-% F⁻ erleichtern das Abschmelzen des Gemengeteppichs. Zu hohe Fluorid-Gehalte verschlechtern allerdings die erreichbaren Werte für die chemische Vorspannung und können zur Trübung des LAS-Glases führen.

Alternativ oder zusätzlich kann die Glasschmelze auch mit einem Halogenidsalz wie z.B. NaCl oder KCl in üblichen Läutermittelkonzentrationen, beispielsweise 0,2 bis 2,0 Gew.-%, geläutert werden.

Außerdem kann auch mittel eines physikalischen Läuterverfahrens, beispielsweise einer Hochtemperaturläuterung - mit oder ohne Einsatz von Läutermitteln wie NaCl, KCl, Sulfat, usw. - geläutert werden.

Die Glasschmelze kann auch zusätzlich oder alternativ durch den Zusatz von Sulfaten, z.B. Na₂SO₄ in üblichen Läutermittelkonzentrationen, beispielsweise zwischen 0,01 und 0,5 Gew.-%, geläutert werden.

Darüber hinaus kann das LAS-Glas gemäß einer Weiterbildung der Erfindung eine Dichte von kleiner als 2,50 g/cm³ aufweisen.

Gemäß einer besonders bevorzugten Weiterbildung der Erfindung weist das LAS-Glas eine Zusammensetzung in Mol-% aus folgenden Bereichen auf:

| | |
|---|---|
| 62 - 68 | SiO₂ |
| 10 - 12 | Al₂O₃ |
| 0,0 - 0,7 | B₂O₃ |
| 10,1 - 11,1 | Li₂O |
| 8,6 - 9,8 | Na₂O |
| 0,0 - 0,3 | K₂O |
| 0,00 - 0,08 | MgO |
| 0,5 - 1,7 | CaO |
| 0,0 - 0,2 | ZnO |
| 1,5 - 2,1 | ZrO₂ |
| 0,0 - 0,3 | P₂O₅ |
| 0,003 - 0,080 | Fe₂O₃ |
| 0,05 - 0,30 | SnO₂ |
| 0,04 - 0,10 | CeO₂. |

Gemäß einer weiteren bevorzugten Weiterbildung der Erfindung weist das LAS-Glas eine Zusammensetzung in Mol-% aus folgenden Bereichen auf:

| | |
|---|---|
| 63 - 67 | SiO₂ |
| 10,8 - 11,5 | Al₂O₃ |
| 0,1 - 0,6 | B₂O₃ |
| 10,3 - 10,8 | Li₂O |
| 9,0 - 9,5 | Na₂O |
| 0,1 - 0,3 | K₂O |
| 0,00 - 0,05 | MgO |
| 0,6 - 1,4 | CaO |
| 0,0 - 0,1 | ZnO |
| 1,6 - 2,0 | ZrO₂ |
| 0,0 - 0,1 | P₂O₅ |
| 0,003 - 0,080 | Fe₂O₃ |
| 0,1 - 0,2 | SnO₂ |
| 0,04 - 0,07 | CeO₂. |

Der Rahmen der Erfindung umfasst darüber hinaus Lithium-Aluminosilicatglas-Gegenstände, die mit dem oben beschriebenen Verfahren herstellbar oder hergestellt sind. Diese LAS-Glas-Gegenstände können in verschiedenen Stärken hergestellt werden, so dass sie unterschiedlichen Anforderungen genügen. So sind mittels Floatens beispielsweise übliche Materialstärken für Fensterscheiben, beispielsweise 3 bis 6 mm herstellbar. Es können jedoch auch sehr dünne Materialstärken, beispielsweise 0,4 bis 0,7 mm, wie sie für Bedienelemente von Touchpanels typisch sind, mittels Floatens hergestellt werden. Selbstverständlich liegen auch alle anderen Formgebungsverfahren, beispielsweise Ziehverfahren wie Down Draw, Up Draw, Overflow Fusion, Fourcault-Verfahren usw., die sich für die Formung der LAS-Gläser eignen, im Rahmen der Erfindung.

Die LAS-Glas-Gegenstände können vorteilhaft dort eingesetzt werden, wo hohe Glassteifigkeiten notwendig sind. Insbesondere vorteilhaft sind auch Bereiche, in denen es auf eine hohe Steifigkeit der Gegenstände ankommt und diese Gegenstände als Massenware produziert werden. Hier fallen dann die vergleichsweise sehr niedrigen Energiekosten und die Material-schonenden, weil niedrigen, Glasübergangs- und Verarbeitungstemperaturen besonders ins Gewicht.

Insbesondere bevorzugt werden solche Lithium-Aluminosilicatglas-Gegenstände als hochstabile Verscheibung oder Verglasung in Bereichen, in denen hohe Druckfestigkeiten und Steifigkeiten benötigt werden, insbesondere als Glaskörper für Fahrzeugverglasungen, als Substrate für Elektronik- oder Solarmodule, als Komponenten in der Solartechnik, als Bedienelemente von Touchpads oder Touchpanels, als Substrat für Harddisks, als Cover oder Display für Mobilfunkgeräte verwendet.

### Detaillierte Beschreibung

Im Folgenden wird die Erfindung anhand von Beispielen detaillierter beschrieben.

Für einige Ausführungsbeispiele sind in Tab. 1 Zusammensetzungen und Eigenschaften von gefloateten Flachgläsern aufgeführt.

Die LAS-Gläser aus Tab. 1 wurden aus üblichen Glasrohstoffen gemäß den genannten Zusammensetzungen in einem Pt-Tiegel bei ca. 1620°C geschmolzen und homogenisiert. Es wurden Scheiben von 6 mm Stärke auf einer Floatanlage hergestellt. Aus diesen Scheiben wurden Prüfmuster, wie beispielsweise Stäbe oder Platten, zur Bestimmung der physikalischen und mechanischen Eigenschaften geschnitten.

An einigen erschmolzenen Gläsern wurden die Dichte, der lineare thermische Ausdehnungskoeffizient zwischen 20 und 300°C, die Transformationstemperatur, die Viskosität bei 10¹³, 10^{7,6}, und 10⁴ dPa·s sowie die KNOOP-Härte HK_{0,1/20} gemäß DIN 9385 bestimmt. Außerdem wurden der E-Modul und der Schermodul mittels der üblichen Stabbiegemethode bestimmt.

Im Anschluss an das chemische Vorspannen, das mittels einer NaNO₃-Schmelze bei 370 bis 400°C für 15 bis 20 Stunden durchgeführt wurde, wurden noch die Biegebruchfestigkeit (MOR = Modulus of Ruputre) gemäß der Doppelringmethode nach EN 1288-5 und die Tiefe der Vorspannungszone (Eindringtiefe) gemessen.

Außerdem wurden schmelzflüssige Proben von LAS-Gläsern mit einer Probengröße von jeweils ca. 2,5 1 Schmelzvolumen an den Rand eines Glasbandes im heißen Bereich eines Floatbades angegossen, um eventuelle Verfärbungen durch die stark reduzierende Floatbadatmosphäre beurteilen und dadurch Rückschlüsse auf die Verarbeitbarkeit der Gläser im Floatverfahren ziehen zu können. Keines der LAS-Gläser, die in Tab. 1 aufgeführt sind, zeigte Kristalle, nachdem sie für 10 Minuten bei Temperaturen zwischen 600 und 1100°C dem Floatbad ausgesetzt waren. Die LAS-Gläser zeigen somit eine außerordentlich niedrige Kristallisationsneigung und sind so problemlos mit dem Floatverfahren zu verarbeiten.

Tabelle 2 zeigt Aluminosilicat-Gläser, die aus dem Stand der Technik bekannt sind. Die Angaben über diese Gläser sind der DE 10 2004 022 629 B9, Tab. 1, Glas 1 sowie der DE 42 06 268 C2, Tab. 1, Beispiel 4 entnommen.

**Tab. 1**

| | Glas 1 (Mol-%) | Glas 2 (Mol-%) | Glas 3 (Mol-%) |
|---|---|---|---|
| SiO₂ | 64,74 | 64,95 | 65,40 |
| B₂O₃ | 0,14 | 0,18 | 0,55 |
| Al₂O₃ | 11,05 | 11,07 | 11,07 |
| Li₂O | 10,85 | 10,66 | 10,29 |
| Na₂O | 9,75 | 9,66 | 8,28 |
| K₂O | 0,05 | 0,05 | 0,07 |
| P₂O₅ | 0,01 | 0,03 | 0,18 |
| CaO | 0,67 | 0,84 | 1,36 |
| SrO | 0,04 | 0,05 | 0,11 |
| ZnO | 0,05 | 0,06 | 0,12 |
| ZrO₂ | 1,84 | 1,84 | 1,95 |
| CeO₂ | 0,04 | 0,04 | 0,06 |
| SnO₂ | 0,04 | | 0,04 |
| Fe₂O₃ | 0,04 | 0,04 | 0,03 |
| | | | |
| (Li₂O+Al₂O₃) / (Na₂O+K₂O) | 2,23 | 2,24 | 2,56 |
| Li₂O/(Li₂O+Na₂O+K₂O) | 0,53 | 0,52 | 0,55 |
| CaO+Fe₂O₃+ZnO+P₂O₅+B₂O₃+CeO₂ | 0,95 | 1,19 | 2,3 |
| | | | |
| α₍₂₀₋₃₀₀₎ (10⁻⁶ K⁻¹) | | 8,50 | |
| T_{g} (°C) | | 505 | |
| Dichte (g/cm³) | | 2,4884 | |
| T 13 (dPa·s) | | 515 | |
| T 7,6 (dPa·s) | | 718 | |
| T 4 (dPa·s) | | 1066 | |
| Kristallisation | | keine | |
| E-Modul (GPa) | | 83,3 | |
| Schermodul (GPa) | | 34,1 | |

**Tab. 2**

| | Glas 4 (Mol-%) | Glas 5 (Mol-%) |
|---|---|---|
| SiO₂ | 57,17 | 60,99 |
| B₂O₃ | | |
| Al₂O₃ | 34,14 | 19,78 |
| Li₂O | 1,82 | 3,57 |
| Na₂O | 0,44 | 4,63 |
| K₂O | 0,15 | |
| P₂O₅ | 1,63 | |
| MgO | 0,92 | |
| CaO | | |
| SrO | | |
| ZnO | 0,70 | |
| ZrO₂ | 1,76 | 11,04 |
| CeO₂ | | |
| SnO₂ | 1,08 | |
| Fe₂O₃ | | |
| F⁻ | 0,19 | |
| SO₃²⁻ | | |
| (Li₂O+Al₂O₃) / (Na₂O+K₂O) | 60,32 | 5,05 |
| Li₂O/ (Li₂O+Na₂O+K₂O) | 0,75 | 0, 44 |
| CaO+Fe₂O₃+ZnO+P₂O₅+B₂O₃+CeO₂ | 2,51 | 0,00 |
| α₍₂₀₋₃₀₀₎ (10⁻⁶ K⁻¹) | 4,16 | 7,36 |
| T_{g} (°C) | 645 | 504 |
| Dichte (g/cm³) | 2,406 | 2,455 |
| T 13 (dPa·s) | | |
| T 7,6 (dPa·s) | | |
| T 4 (dPa·s) | 1307 | 1078 |
| Kristallisation | | |
| E-Modul (GPa) | 85 | 86 |

Ein Vergleich der LAS-Gläser, die unter die Erfindung fallen (Tab. 1) mit den Gläsern aus dem Stand der Technik (Tab. 2) zeigt, dass die Gläser aus dem Stand der Technik zwar teilweise die Anforderungen an den E-Modul (> 82 GPa), die niedrigen Glasübergangs- (< 540°C) und Verarbeitungstemperaturen (< 1150°C) oder auch die beanspruchten Alkaliverhältnisse:
(Li₂O+Al₂O₃) / (Na₂O+K₂O) > 2,
0,47 < Li₂O/ (Li₂O+Na₂O+K₂O) < 0,70
erfüllen. In keinem Fall jedoch liegen die vorteilhaften Merkmale alle in der beanspruchten Kombination vor. Darüber hinaus wird auch in keinem der Fälle die Voraussetzung:
0,8 < CaO+Fe₂O₃+ZnO+P₂O₅+B₂O₃+CeO₂ < 3, wobei zumindest vier aus den sechs Oxiden enthalten sind,
erfüllt.

Glas 4 weist ein Verhältnis (Li₂O+Al₂O₃ / (Na₂O+K₂O) auf, das größer als zwei ist, wie beansprucht. Der E-Modul ist mit 85 GPa hoch.

Allerdings enthält das Glas insgesamt mit etwa 3,6 Mol-% nur geringe Mengen ionenaustauschbare Alkalioxide, was eine vergleichsweise geringe Vorspannbarkeit bedingt - allein aufgrund der geringen Menge theoretisch austauschbarer Ionen.

Das Li₂O-Verhältnis zur Gesamtmenge der Alkalioxide ist mit 0,75 größer als der beanspruchte Bereich. Die T_{g}- und V_{A}-Werte sind mit 645°C und 1307°C sehr hoch, was energieintensiv und materialbelastend ist.

Der Gehalt an den Mindermengenbestandteilen ist größer als im beanspruchten Bereich vorgesehen und wird nur durch zwei verschiedene Oxide gestellt. Darüber hinaus ist der Al₂O₃-Gehalt des Glases mit 34,14 Mol-% sehr hoch. Aus dieser Kombination kann vermutet werden, dass das Glas eine relativ hohen Entglasungsneigung, insbesondere bei einer Formgebung mittels Floatens, aufweist.

Darüber hinaus ist auch der lineare thermische Ausdehnungskoeffizient des Glases mit 4,16 * 10⁻⁶ K⁻¹ relativ hoch, so dass es leichter zum Brechen des Glases beispielsweise in der Kühlbahn kommen kann.

Glas 5 aus Tab. 2 weist ein (Li₂O+Al₂O₃) / (Na₂O+K₂O)-Verhältnis von größer als zwei auf. Auch die T_{g}- und V_{A}-Werte liegen mit 504°C und 1078°C innerhalb des beanspruchten Bereichs. Der E-Modul ist mit 86 GPa hoch.

Das Verhältnis von Li₂O zum gesamten Alkalioxid-Gehalt liegt unterhalb des beanspruchten Bereichs. Damit weist das Glas im Verhältnis relativ wenig Li₂O auf und ist somit nicht für den Li-Ionenaustausch beim chemischen Vorspannen optimiert.

Es sind keine Mindermengebestandteile wie CaO, Fe₂O₃, ZnO, P₂O₅, B₂O₃ oder CeO₂ enthalten. Darüber hinaus liegt der Al₂O₃-Gehalt mit etwa 20 Mol-% relativ hoch. Diese Kombination lässt vermuten, dass dieses Glas eine relativ hohe Entglasungsneigung aufweist und daher nur schlecht gefloatet werden kann. Darüber hinaus enthält es mit 11,04 Mol-% auch sehr viel ZrO₂, was zu einer hoch-Quarzmischkristall-Bildung auf der Oberfläche des Glases beim Floaten führen kann.

Somit sind die Gläser, die aus dem Stand der Technik bekannt sind, zwar teilweise chemisch vorspannbar, jedoch ist davon auszugehen, dass sie keine optimale Entglasungsstabilität aufweisen, die wesentlich für die Formgebung mittels des Floatverfahrens ist. Auch sind die Glaszusammensetzungen nicht für den Li-Ionenaustausch zum chemischen Vorspannen hin optimiert.

Gerade die beanspruchte Kombination der Oxid-Verhältnisse zusammen mit den übrigen Glaskomponenten ermöglicht jedoch die Herstellung von LAS-Gläsern mit einer hohen Steifigkeit, niedrigen T_{g}- und V_{A}-Werten, die mittels des kostengünstigen Floatverfahrens hergestellt und durch chemisches und/oder thermisches Vorspannen Biegebruchfestigkeiten von mehr als 500 N/mm² aufweisen. Anders ausgedrückt ist hier erstmals ein LAS-Glas beschrieben, dass eine hohe Steifigkeit und eine hohe Biegezugfestigkeit aufweist, aber trotzdem kosten- und zeitgünstig hergestellt werden kann.

## Patentansprüche

1. Lithium-Aluminosilicatglas, umfassend
- eine Zusammensetzung in Mol-% aus:
| | |
|---|---|
| 60 - 70 | SiO₂ |
| 10 - 13 | Al₂O₃ |
| 0,0 - 0,9 | B₂O₃ |
| 9,6 - 11,6 | Li₂O |
| 8,2 - < 10 | Na₂O |
| 0,0 - 0,7 | K₂O |
| 0,0 - 0,2 | MgO |
| 0,2 - 2,3 | CaO |
| 0,0 - 0,4 | ZnO |
| 1,3 - 2,6 | ZrO₂ |
| 0,0 - 0,5 | P₂O₅ |
| 0,003 - 0,100 | Fe₂O₃ |
| 0,0 - 0,3 | SnO₂ |
| 0,004 - 0,200 | CeO₂, |
wobei folgende Verhältnisse gelten:
(Li₂O+Al₂O₃) / (Na₂O+K₂O) > 2,
0,47 < Li₂O/(Li₂O+Na₂O+K₂O) < 0,70,
0,8 < CaO+Fe₂O₃+ZnO+P₂O₅+B₂O₃+CeO₂ < 3, wobei zumindest vier aus den sechs Oxiden enthalten sind, und wobei
- das Lithium-Aluminosilicatglas einen E-Modul von zumindest 82 GPa aufweist,
- eine Glasübergangstemperatur T_{g} von kleiner als 540°C und/oder eine Verarbeitungstemperatur von kleiner als 1150°C aufweist,
- für eine Formgebung mittels eines Floatprozesses geeignet ist, und
- chemisch und/oder thermisch vorspannbar ist, so dass es eine Biegebruchfestigkeit, gemessen mit der Doppelringmethode nach EN 1288-5, von zumindest 550 N/mm² aufweist.

2. Lithium-Aluminosilicatglas nach Anspruch 1, **dadurch gekennzeichnet, dass** es einen linearen thermischen Ausdehnungskoeffizienten α₍₂₀₋₃₀₀₎ zwischen 8,0 * 10⁻⁶ K⁻¹ und 9,0 * 10⁻⁶ K⁻¹ aufweist.

3. Lithium-Aluminosilicatglas nach einem der vorstehenden Ansprüche, **dadurch gekennzeichnet, dass** aus der Gruppe der läuteraktiven Komponenten Fe₂O₃, CeO₂ und SnO₂ zumindest zwei Komponenten umfasst sind, die zusammen zumindest 0,1 Mol-% der Gesamtzusammensetzung ausmachen, d.h. SnO₂+CeO₂+Fe₂O₃ > 0,1, und/oder der SnO₂-Gehalt maximal 0,5 Gew.-% beträgt.

4. Lithium-Aluminosilicatglas nach Anspruch 3, **dadurch gekennzeichnet, dass** das Lithium-Aluminosilicatglas bis auf technisch oder ökonomisch nicht zu vermeidende Rückstände in den Glasrohstoffen frei von TiO₂ und/oder MgO und/oder As₂O₃ und/oder Sb₂O₃ und/oder V₂O₅ und/oder Bi₂O₃ und/oder PbO ist.

5. Lithium-Aluminosilicatglas nach einem der vorstehenden Ansprüche, **dadurch gekennzeichnet, dass** das Lithium-Aluminosilicatglas chemisch vorgespannt ist, indem Li-Ionen aus dem Glas gegen Ionen mit einem größeren Ionenradius ausgetauscht wurden.

6. Lithium-Aluminosilicatglas nach einem der vorstehenden Ansprüche, **dadurch gekennzeichnet, dass** es eine Zusammensetzung in Mol-% aus folgenden Bereichen aufweist:
| | |
|---|---|
| 62 - 68 | SiO₂ |
| 10 - 12 | Al₂O₃ |
| 0,0 - 0,7 | B₂O₃ |
| 10,1 - 11,1 | Li₂O |
| 8,6 - 9,8 | Na₂O |
| 0,0 - 0,3 | K₂O |
| 0,00 - 0,08 | MgO |
| 0,5 - 1,7 | CaO |
| 0,0 - 0,2 | ZnO |
| 1,5 - 2,1 | ZrO₂ |
| 0,0 - 0,3 | P₂O₅ |
| 0,003 - 0,080 | Fe₂O₃ |
| 0,05 - 0,30 | SnO₂ |
| 0,04 - 0,10 | CeO₂. |

7. Lithium-Aluminosilicatglas nach einem der vorstehenden Ansprüche, **dadurch gekennzeichnet, dass** es eine Zusammensetzung in Mol-% aus folgenden Bereichen aufweist:
| | |
|---|---|
| 63 - 67 | SiO₂ |
| 10,8 - 11,5 | Al₂O₃ |
| 0,1 - 0,6 | B₂O₃ |
| 10,3 - 10,8 | Li₂O |
| 9,0 - 9,5 | Na₂O |
| 0,1 - 0,3 | K₂O |
| 0,00 - 0,05 | MgO |
| 0,6 - 1,4 | CaO |
| 0,0 - 0,1 | ZnO |
| 1,6 - 2,0 | ZrO₂ |
| 0,0 - 0,1 | P₂O₅ |
| 0,003 - 0,080 | Fe₂O₃ |
| 0,1 - 0,2 | SnO₂ |
| 0,04 - 0,07 | CeO₂. |

8. Verfahren zur Herstellung eines Lithium-Aluminosilicatglas-Gegenstands mit einem E-Modul von zumindest 82 GPa sowie mit einer Glasübergangstemperatur von kleiner als 540°C und/oder einer Verarbeitungstemperatur von kleiner als 1150°C, umfassend zumindest die Schritte:
- Herstellen einer Glasschmelze mit einer Zusammensetzung in Mol-% aus dem Bereich:
| | |
|---|---|
| 60 -70 | SiO₂ |
| 10 - 13 | Al₂O₃ |
| 0,0 - 0,9 | B₂O₃ |
| 9,6 - 11,6 | Li₂O |
| 8,2 - < 10,0 | Na₂O |
| 0,0 - 0,7 | K₂O |
| 0,0 - 0,2 | MgO |
| 0,2 - 2,3 | CaO |
| 0,0 - 0,4 | ZnO |
| 1,3 - 2,6 | ZrO₂ |
| 0,0 - 0,5 | P₂O₅ |
| 0,003 - 0,100 | Fe₂O₃ |
| 0,0 - 0,3 | SnO₂ |
| 0,004 - 0,2 | CeO₂, |
wobei folgende Verhältnisse gelten:
(Li₂O+Al₂O₃) / (Na²O+K₂O) > 2,
0,47 < Li₂O/ (Li₂O+Na₂O+K₂O) < 0, 70 und
0,8 < CaO+Fe₂O₃+ZnO+P₂O₅+B₂O₃+CeO₂ < 3,
- Formen eines Lithium-Aluminosilikatglas-Gegenstands, insbesondere mittels eines Floatverfahrens.

9. Verfahren nach Anspruch 8, **dadurch gekennzeichnet, dass** zumindest zwei der läuteraktiven Komponente Fe₂O₃, CeO₂ und/oder SnO₂ der Schmelze zugegeben werden, die zusammen zumindest 0,1 Mol-% der Gesamtzusammensetzung ausmachen.

10. Verfahren nach Anspruch 8, **dadurch gekennzeichnet, dass** als läuteraktive Komponenten Halogenidsalze, insbesondere NaCl und/oder KCl, wobei der Läutermittelgehalt im üblichen Rahmen liegt, bevorzugt zwischen 0,2 und 2,0 Gew.-% der Gesamtzusammensetzung, zugegeben werden.

11. Verfahren nach Anspruch 8, **dadurch gekennzeichnet, dass** als läuteraktive Komponente ein Sulfat zugegeben wird.

12. Verfahren nach einem der Ansprüche 8 bis 11, **dadurch gekennzeichnet, dass** der Lithium-Aluminosilicatglas-Gegenstand chemisch, insbesondere durch Austausch der Li-Ionen aus dem Lithium-Aluminosilicatglas gegen Ionen mit einem größeren Ionenradius, und/oder thermisch vorgespannt wird.

13. Verfahren nach Anspruch 12, **dadurch gekennzeichnet, dass** das Lithium-Aluminosilicat-Glas unter Verwendung einer herkömmlichen Luftvorspannanlage für Kalk-Natron-Glas mit Wärmeübergangskoeffizienten zwischen 200 und 500 W m⁻² K⁻¹ bei 1 bis 9 kPa Anblasdruck thermisch vorgespannt wird.

14. Verwendung eines mit einem Verfahren eines der Ansprüche 8 bis 13 hergestellten Lithium-Aluminosilicatglas-Gegenstands als hochstabile Verscheibung oder Verglasung in Bereichen, in denen hohe Druckfestigkeiten und Steifigkeiten benötigt werden, insbesondere als Glaskörper für Fahrzeugverglasungen, als Substrat für Elektronik- oder Solarmodule, als Komponenten für Solarmodule, als Bedienelement von Touchpads oder Touchpänels, als Substrat für Harddisks, als Cover oder Display für Mobilfunkgeräte.

## Claims

1. A lithium aluminosilicate glass, comprising:
- a composition, in mol%, of:
| | |
|---|---|
| 60 - 70 | SiO₂ |
| 10 - 13 | Al₂O₃ |
| 0.0 - 0.9 | B₂O₃ |
| 9.6 - 11.6 | Li₂O |
| 8.2 - < 10 | Na₂O |
| 0.0 - 0.7 | K₂O |
| 0.0 - 0.2 | MgO |
| 0.2 - 2.3 | CaO |
| 0.0 - 0.4 | ZnO |
| 1.3 - 2.6 | ZrO₂ |
| 0.0 - 0.5 | P₂O₅ |
| 0.003 - 0.100 | Fe₂O₃ |
| 0.0 - 0.3 | SnO₂ |
| 0.004 - 0.200 | CeO₂ |
in compliance with the following relations:
(Li₂O+Al₂O₃) / (Na₂O+K₂O) > 2;
0.47 < Li₂O/ (Li₂O+Na₂O+K₂O) < 0.70;
0.8 < CaO+Fe₂O₃+ZnO+P₂O₅+B₂O₃+CeO₂ < 3; wherein at least four out of the six oxides are included; and wherein
- said lithium aluminosilicate glass exhibits a modulus of elasticity of at least 82 GPa;
- has a glass transition point T_{g} of less than 540 °C and/or a working point of less than 1150 °C;
- is suitable for being shaped by a float process; and
- can be tempered chemically and/or thermally, so that it has a flexural strength of at least 550 N/mm², as measured with the double ring method according to EN 1288-5.

2. The lithium aluminosilicate glass according to claim 1, **characterized in that** it has a linear coefficient of thermal expansion α₍₂₀₋₃₀₀₎ between 8.0 * 10⁻⁶ K⁻¹ and 9.0 * 10⁻⁶ K⁻¹.

3. The lithium aluminosilicate glass according to any of the preceding claims, **characterized in that** it comprises at least two components from the group of refining components including Fe₂O₃, CeO₂, and SnO₂, which together account for at least 0.1 mol% of the total composition, i.e. SnO₂+CeO₂+Fe₂O₃ > 0.1, and/or wherein the content of SnO₂ is not more than 0.5 wt%.

4. The lithium aluminosilicate glass according to claim 3, **characterized in that** the lithium aluminosilicate glass is free of TiO₂ and/or MgO and/or As₂O₃ and/or Sb₂O₃ and/or V₂O₅ and/or Bi₂O₃ and/or PbO, except for technologically or economically unavoidable residues in the glass raw materials.

5. The lithium aluminosilicate glass according to any of the preceding claims, **characterized in that** the lithium aluminosilicate glass was chemically tempered by exchanging Li ions from the glass for ions having a greater ionic radius.

6. The lithium aluminosilicate glass according to any of the preceding claims, **characterized in that** it comprises a composition, in mol%, from the following ranges:
| | |
|---|---|
| 62 - 68 | SiO₂ |
| 10 - 12 | Al₂O₃ |
| 0.0 - 0.7 | B₂O₃ |
| 10.1 - 11.1 | Li₂O |
| 8.6 - 9.8 | Na₂O |
| 0.0 - 0.3 | K₂O |
| 0.00 - 0.08 | MgO |
| 0.5 - 1.7 | CaO |
| 0.0 - 0.2 | ZnO |
| 1.5 - 2.1 | ZrO₂ |
| 0.0 - 0.3 | P₂O₅ |
| 0.003 - 0.080 | Fe₂O₃ |
| 0.05 - 0.30 | SnO₂ |
| 0.04 - 0.10 | CeO₂. |

7. The lithium aluminosilicate glass according to any of the preceding claims, **characterized in that** it comprises a composition, in mol%, from the following ranges:
| | |
|---|---|
| 63 - 67 | SiO₂ |
| 10.8 - 11.5 | Al₂O₃ |
| 0.1 - 0.6 | B₂O₃ |
| 10.3 - 10.8 | Li₂O |
| 9.0 - 9.5 | Na₂O |
| 0.1 - 0.3 | K₂O |
| 0.00 - 0.05 | MgO |
| 0.6 - 1.4 | CaO |
| 0.0 - 0.1 | ZnO |
| 1.6 - 2.0 | ZrO₂ |
| 0.0 - 0.1 | P₂O₅ |
| 0.003 - 0.080 | Fe₂O₃ |
| 0.1 - 0.2 | SnO₂ |
| 0.04 - 0.07 | CeO₂. |

8. A method for producing a lithium aluminosilicate glass article having a modulus of elasticity of at least 82 GPa and a glass transition point below 540 °C and/or a working point below 1150 °C, comprising at least the steps of:
- preparing a glass melt having a composition, in mol%, from the following ranges:
| | |
|---|---|
| 60 - 70 | SiO₂ |
| 10 - 13 | Al₂O₃ |
| 0.0 - 0.9 | B₂O₃ |
| 9.6 - 11.6 | Li₂O |
| 8.2 - < 10.0 | Na₂O |
| 0.0 - 0.7 | K₂O |
| 0.0 - 0.2 | MgO |
| 0.2 - 2.3 | CaO |
| 0.0 - 0.4 | ZnO |
| 1.3 - 2.6 | ZrO₂ |
| 0.0 - 0.5 | P₂O₅ |
| 0.003 - 0.100 | Fe₂O₃ |
| 0.0 - 0.3 | SnO₂ |
| 0.004 - 0.2 | CeO₂ |
in compliance with the following relations:
(Li₂O+Al₂O₃) / (Na₂O+K₂O) > 2;
0.47 < Li₂O/ (Li₂O+Na₂O+K₂O) < 0.70; and
0.8 < CaO+Fe₂O₃+ZnO+P₂O₅+B₂O₃+CeO₂ < 3 ;
- forming a lithium aluminosilicate glass article, in particular by a float process.

9. The method according to claim 8, **characterized in that** at least two of the refining components Fe₂O₃, CeO₂, and/or SnO₂ are added to the melt, which added components together account for at least 0.1 mol% of the total composition.

10. The method according to claim 8, **characterized in that** halogenide salts, in particular NaCl and/or KCl are added as refining components, the content of refining components being in a common range, preferably from 0.2 to 2.0 wt% of the total composition.

11. The method according to claim 8, **characterized in that** a sulfate is added as a refining component.

12. The method according to any of claims 8 to 11, **characterized in that** the lithium aluminosilicate glass article is chemically tempered, in particular by exchanging Li ions from the lithium aluminosilicate glass for ions having a greater ionic radius, and/or is thermally tempered.

13. The method according to claim 12, **characterized in that** the lithium aluminosilicate glass is thermally tempered using a conventional air tempering system for soda-lime glass with heat transfer coefficients between 200 and 500 Wm⁻²K⁻¹ at a blowing pressure from 1 to 9 kPa.

14. Use of a lithium aluminosilicate glass article produced by a method according to any of claims 8 to 13 as a high-strength pane or glazing in fields where high compressive strengths and stiffness are required, in particular as a glass body for vehicle glazings, as a substrate for electronic and solar modules, as components for solar modules, as a control element of touchpads or touch panels, as a substrate for hard disks, as a cover or a display for mobile telecommunications devices.

## Revendications

1. Verre d'aluminosilicate de lithium, comprenant :
- une composition, en % en moles, de
| | |
|---|---|
| 60 - 70 | SiO₂ |
| 10 - 13 | Al₂O₃ |
| 0,0 - 0,9 | B₂O₃ |
| 9,6 - 11,6 | Li₂O |
| 8,2 - < 10 | Na₂O |
| 0,0 - 0,7 | K₂O |
| 0,0 - 0,2 | MgO |
| 0,2 - 2,3 | CaO |
| 0,0 - 0,4 | ZnO |
| 1,3 - 2,6 | ZrO₂ |
| 0,0 - 0,5 | P₂O₅ |
| 0,003 - 0,100 | Fe₂O₃ |
| 0,0 - 0,3 | SnO₂ |
| 0,004 - 0,200 | CeO₂, |
dans laquelle les conditions suivantes sont remplies :
(Li₂O+Al₂O₃) / (Na₂O+K₂O) > 2,
0,47 < LiO₂/ (Li₂O+Na₂O+K₂O) < 0,70,
0,8 < CaO+Fe₂O₃+ZnO+P₂O₅+B₂O₃+CeO₂ < 3,
au moins quatre oxydes sur six étant présents, et
- le verre d'aluminosilicate de lithium présentant un module d'élasticité d'au moins 82 GPa,
- une température de transition vitreuse T_{g} inférieure à 540°C et/ou une température de traitement inférieure à 1150°C,
- étant approprié pour un formage au moyen d'un procédé de fabrication flotté, et
- apte à être précontraint chimiquement et/ou thermiquement de manière à présenter une résistance à la rupture par flexion, mesurée par la méthode d'essai avec doubles anneaux d'après la norme EN 1288-5, d'au moins 550 N/mm².

2. Verre d'aluminosilicate de lithium selon la revendication 1, **caractérisé en ce qu'**il présente un coefficient de dilatation thermique linéaire α₍₂₀₋₃₀₀₎ situé entre 8,0 * 10⁻⁶ K⁻¹ et 9,0 * 10⁻⁶ K⁻¹.

3. Verre d'aluminosilicate de lithium selon l'une des revendications précédentes, **caractérisé en ce qu'**il comprend au moins deux composants issus du groupe des composants actifs pour l'affinage Fe₂O₃, CeO₂ et SnO₂, qui constituent conjointement au moins 0,1 % en moles de la composition totale, ce qui veut dire que SnO₂+CeO₂+Fe₂O₃ > 0,1 et/ou la teneur en SnO₂ atteint au maximum 0,5 % en poids.

4. Verre d'aluminosilicate de lithium selon la revendication 3, le verre d'aluminosilicate de lithium étant **caractérisé en ce qu'**il est exempt de TiO₂ et/ou MgO et/ou As₂O₃ et/ou Sb₂O₃ et/ou V₂O₅ et/ou Bi₂O₃ et/ou PbO, à l'exception des résidus inévitables pour des motifs techniques ou économiques, présents dans les matières premières vitreuses.

5. Verre d'aluminosilicate de lithium selon l'une des revendications précédentes, le verre d'aluminosilicate de lithium étant **caractérisé en ce qu'**il est précontraint chimiquement en remplaçant les ions Li du verre par les ions ayant un rayon ionique plus grand.

6. Verre d'aluminosilicate de lithium selon l'une des revendications précédentes, **caractérisé en ce qu'**il présente une composition en % en moles dans les plages suivantes :
| | |
|---|---|
| 62 - 68 | SiO₂ |
| 10 - 12 | Al₂O₃ |
| 0,0 - 0,7 | B₂O₃ |
| 10,1 - 11,1 | Li₂O |
| 8,6 - 9,8 | Na₂O |
| 0,0 - 0,3 | K₂O |
| 0,0 - 0,08 | MgO |
| 0,5 - 1,7 | CaO |
| 0,0 - 0,2 | ZnO |
| 1,5 - 2,1 | ZrO₂ |
| 0,0 - 0,3 | P₂O₅ |
| 0,003 - 0,080 | Fe₂O₃ |
| 0,05 - 0,30 | SnO₂ |
| 0,04 - 0,10 | CeO₂. |

7. Verre d'aluminosilicate de lithium selon l'une des revendications précédentes, **caractérisé en ce qu'**il présente une composition en % en moles dans les plages suivantes :
| | |
|---|---|
| 63 - 67 | SiO₂ |
| 10,8 - 11,5 | As₂O₃ |
| 0,1 - 0,6 | B₂O₃ |
| 10,3 - 10,8 | Li₂O |
| 9,0 - 9,5 | Na₂O |
| 0,1 - 0,3 | K₂O |
| 0,00 - 0,05 | MgO |
| 0,6 - 1,4 | CaO |
| 0,0 - 0,1 | ZnO |
| 1,6 - 2,0 | ZrO₂ |
| 0,0 - 0,1 | P₂O₅ |
| 0,003 - 0,080 | Fe₂O₃ |
| 0,1 - 0,2 | SnO₂ |
| 0,04 - 0,07 | CeO₂. |

8. Procédé de fabrication d'un objet en verre d'aluminosilicate de lithium ayant un module d'élasticité d'au moins 82 GPa ainsi qu'une température de transition vitreuse inférieure à 540°C et/ou une température de traitement inférieure à 1150°C, comprenant au moins les étapes de :
- fabrication d'une matière fondue de verre ayant une composition en % en moles dans la plage :
| | |
|---|---|
| 60 - 70 | SiO₂ |
| 10 - 13 | Al₂O₃ |
| 0,0 - 0,9 | B₂O₃ |
| 9,6 - 11,6 | Li₂O |
| 8,2 - < 10,0 | Na₂O |
| 0,0 - 0,7 | K₂O |
| 0,0 - 0,2 | MgO |
| 0,2 - 2,3 | CaO |
| 0,0 - 0,4 | ZnO |
| 1,3 - 2,6 | ZrO₂ |
| 0,0 - 0,5 | P₂O₅ |
| 0,003 - 0,100 | Fe₂O₃ |
| 0,0 - 0,3 | SnO₂ |
| 0,004 - 0,200 | CeO₂, |
les conditions suivantes étant remplies :
(Li₂O+Al₂O₃) / (Na₂O+K₂O) > 2,
0,47 < LiO₂/ (Li₂O+Na₂O+K₂O) < 0,70, et
0,8 < CaO+Fe₂O₃+ZnO+P₂O₅+B₂O₃+CeO₂ < 3,
- formage d'un objet en verre d'aluminosilicate de lithium, en particulier au moyen d'un procédé de fabrication flotté.

9. Procédé selon la revendication 8, **caractérisé en ce qu'**au moins deux des composants actifs pour l'affinage Fe₂O₃, CeO₂ et/ou SnO₂ sont ajoutés à la matière fondue, lesquels constituent conjointement au moins 0,1 % en moles de la composition totale.

10. Procédé selon la revendication 8, **caractérisé en ce que** des sels d'halogénure, en particulier du NaCl et/ou du KCl, sont ajoutés comme composants actifs pour l'affinage, la teneur en agent d'affinage se situant dans la limite usuelle, de préférence entre 0,2 et 2,0 % en poids de la composition totale.

11. Procédé selon la revendication 8, **caractérisé en ce qu'**un sulfate est ajouté comme composant actif pour l'affinage.

12. Procédé selon l'une des revendications 8 à 11, **caractérisé en ce que** l'objet en verre d'aluminosilicate de lithium est précontraint chimiquement, en particulier par remplacement des ions Li du verre d'aluminosilicate de lithium par des ions ayant un rayon ionique plus grand, et/ou précontraint thermiquement.

13. Procédé selon la revendication 12, **caractérisé en ce que** le verre d'aluminosilicate de lithium est précontraint thermiquement en utilisant une installation de précontrainte à l'air traditionnelle pour le verre sodocalcique ayant des coefficients de transfert de chaleur compris entre 200 et 500 W m⁻² K⁻¹ pour des pressions de soufflage de 1 à 9 kPa.

14. Utilisation d'un objet en verre d'aluminosilicate de lithium fabriqué par un procédé selon l'une des revendications 8 à 13 à titre de vitrage ou de vitre dans des secteurs où des résistances à la pression et des rigidités élevées sont nécessaires, en particulier en tant que corps vitreux pour des vitres de véhicules, comme substrat pour des modules électroniques ou des panneaux solaires, comme composants pour des panneaux solaires, comme élément de commande de pavés tactiles ou d'écrans tactiles, comme substrat pour des disques durs, comme capot ou écran pour des appareils de télécommunications mobiles.
